(19) Europäisches Patentamt
European Patent Office
Office européen des brevets

(11) Publication number: **0 398 561 A2**

(12) # EUROPEAN PATENT APPLICATION

(21) Application number: **90304869.2**

(22) Date of filing: **04.05.90**

(51) Int. Cl.⁵: **A01N 57/12, A01N 25/22, C07F 9/165**

(30) Priority: **17.05.89 JP 125154/89**

(43) Date of publication of application: **22.11.90 Bulletin 90/47**

(84) Designated Contracting States: **CH DE FR GB IT LI NL**

(71) Applicant: **SUMITOMO CHEMICAL COMPANY, LIMITED**
**5-33, Kitahama 4-chome Chuo-ku**
**Osaka(JP)**

(72) Inventor: **Sasaki, Mitsuru**
**10-5-305, Sonehigashinocho-2-chome**
**Toyonaka-shi(JP)**
Inventor: **Itoh, Yoshikazu**
**11-8-304, Sonehigashinocho-2-chome**
**Toyonaka-shi(JP)**
Inventor: **Ogawa, Masao**
**11-8-303, Sonehigashinocho-2-chome**
**Toyonaka-shi(JP)**

(74) Representative: **Cresswell, Thomas Anthony et al**
**J.A. Kemp & Co. 14 South Square Gray's Inn**
**London WC1R 5EU(GB)**

(54) **Method for stabilizing organic phosphoric ester and soil pest controlling agent containing, as active ingredient, compound stabilized by the method.**

(57) Organic phosphoric esters having the formula (I),

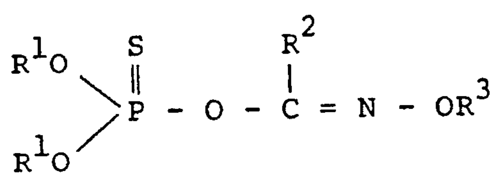

wherein $R^1$, $R^2$ and $R^3$ are independently lower ($C_1$-$C_2$) alkyl, can be stabilized by being mixed with a Michael's acceptor, hindered amine stabilizer or epoxy compound due to the effective prevention of thiono-thiolo isomerization reaction. Further, there is provided an excellent soil pest controlling agent containing, as an active ingredient, the organic phosphoric ester stabilized by this method.

EP 0 398 561 A2

# METHOD FOR STABILIZING ORGANIC PHOSPHORIC ESTER AND SOIL PEST CONTROLLING AGENT CONTAINING, AS ACTIVE INGREDIENT, COMPOUND STABILIZED BY THE METHOD

The present invention relates to a method for stabilizing an organic phosphoric ester which comprises adding a Michael's acceptor, a hindered amine light stabilizer or an epoxy compound to an organic phosphoric ester having the formula (I),

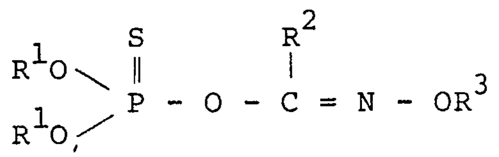

(I)

wherein $R^1$, $R^2$ and $R^3$ independently represent a lower ($C_1$-$C_2$) alkyl, and a soil pest controlling agent containing, as an active ingredient, the organic phosphoric ester stabilized by the method.

Organic phosphoric esters having the formula (I) are insecticidal compounds disclosed, e.g. in JP-A-63-310896.

The esters of the formula (I) called thionotype phosphoric esters, easily undergo an isomerization reaction to convert themselves to thiol-type phosphoric esters having the formula (II),

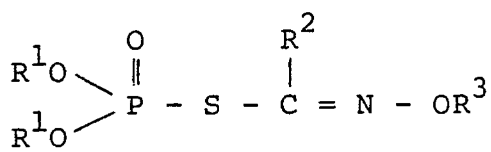

(II)

wherein $R^1$, $R^2$ and $R^3$ are as defined above.

Since the thiol-type phosphoric esters have a lower insecticidal activity than the thiono-type phosphoric esters of the formula (I), preventing the isomerization reaction during the storage was a long-standing problem.

The present inventors have made a diligent study to solve the problem, and found that the addition of a Michael's acceptor, a hindered amine light stabilizer or an epoxy compound to the organic phosphoric esters of the formula (I) can prevent the isomerization reaction and stabilize the esters.

That is, according to this invention, there is provided a method for stabilizing an organic phosphoric ester of the formula (I), which comprises adding a Michael's acceptor, a hindered amine light stabilizer or an epoxy compound to the organic phosphoric ester; and a soil pest controlling agent containing, as an active ingredient, the ester stabilized by this method.

Specific examples of the organic phosphoric ester having the formula (I) are O,O-diethyl O-1-(N-methoxyimino)methylphosphorothioate, O,O-diethyl O-1-(N-methoxyimino)ethylphosphorothioate, O,O-diethyl O-1-(N-ethoxyimino)methylphosphorothioate, O,O-diethyl O-1-(N-ethoxyimino)ethylphosphorothioate, O,O-dimethyl O-1-(N-methoxyimino)methylphosphorothioate, O,O-dimethyl O-1-(N-methoxyimino)-ethylphosphorothioate, O,O-dimethyl, O-1-(N-ethoxyimino)methylphosphorothioate, and O,O-dimethyl O-1-(N-ethoxyimino)ethylphosphorothioate. Of these compounds, O,O-diethyl O-1-(N-methoxyimino)-methylphosphorothioate and O,O-diethyl O-1-(N-methoxyimino)ethylphosphorothioate are preferred.

The Michael's acceptor used in the present invention refers to an olefin which undergoes a Michael's addition reaction, as is defined, e.g. in Organic Reactions, Vol. 10, p. 179 (John Wiley and Sons, Inc.). In other words, it refers to an olefin having an electron-withdrawing group (such as a carbonyl, carboxyl, cyano, nitro, sulfonyl, sulfinyl or phosphoryl group) adjacent to the carbon-carbon double bond. More specifically, it refers to a compound having the formula (III),

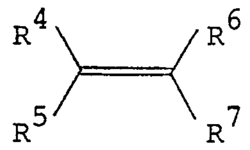

(III)

wherein at least one member of $R^4$, $R^5$, $R^6$ and $R^7$ is an electron-withdrawing group, and the remaining members are independently hydrogen, halogen, an alkyl, alkenyl, alkynyl, phenyl or allyl, or an alkyl, alkenyl, alkynyl, phenyl or allyl substituted with halogen, carbonyl, carboxyl, cyano, nitro, sulfonyl, sulfinyl, or phosphoryl; and a compound having the formula (IV),

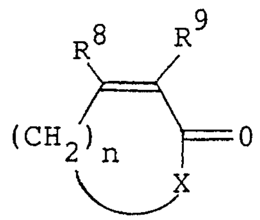

(IV)

wherein $R^8$ and $R^9$ are independently hydrogen or an alkyl, X is oxygen, sulfur, methylene, imino, a substituted methylene or a substituted imino, and n is 1 or 2.

Specific examples of the Michael's acceptor having the formula (III) are α,β-unsaturated aldehydes (e.g. acrolein, methacrolein, cinnamic aldehyde), α,β-unsaturated ketones (e.g. methyl vinyl ketone, chalcone, benzal acetone), α,β-unsaturated nitriles (e.g. acrylonitrile, methacrylonitrile), α,β-unsaturated carboxylic esters (e.g. methyl acrylate, lauryl methacrylate), α,β-unsaturated nitro compounds (e.g. nitrostyrene, nitroethylene), α,β-unsaturated sulfone compounds (e.g. phenylvinyl sulfone, divinyl sulfone), and α,β-unsaturated phosphonic esters (e.g. O,O-dimethylvinyl phosphonate, O,O-diethylvinyl phosphonate). Specific examples of the Michael's acceptor having the formula (IV) are 2-cyclopentenone, 2-cyclohexenone, p-mentha-6,8-dien-2-one, 2-oxa-5-cyclohexenone, 2-thia-5-cyclohexanone, 2-methyl-2-aza-4-cyclopentenone, etc. Further, p-benzoquinone, 1,4-naphthoquinone, etc., also belong to the Michael's acceptor.

The hindered amine light stabilizer used in the present invention refers to piperidine derivatives in which all of the hydrogen atoms in 2 and 6 positions are replaced by methyl groups. More specifically, it refers to a piperidine derivative having the formula (V),

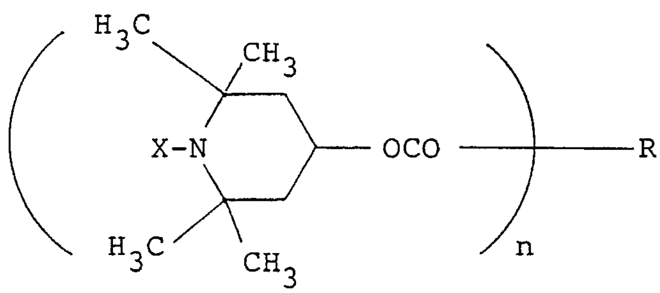

(V)

wherein n is an integer of 1, 2 or 3, X is hydrogen or methyl, and R is an alkyl, cycloalkyl, aralkyl, alkenyl or aryl when n is 1, an alkylene, arylene or arylenedialkylene when n is 2, or an alkanetriyl, arenetriyl or arenetriyl trialkylene when n is 3. Usually, R is a group having 1 to about 10 carbon atoms.

Specific examples of the hindered amine light stabilizer are 4-acetoxy-2,2,6,6-tetramethylpiperidine, 4-(phenylacetoxy)-2,2,6,6-tetramethylpiperidine, 4-cyclohexanoyloxy-2,2,6,6-tetramethylpiperidine, 4-benzoyloxy-2,2,6,6-tetramethylpiperidine, 4-(o-toluoyloxy)-2,2,6,6-tetramethylpiperidine, bis(2,2,6,6-tetramethyl-4-piperidyl)sebacate, bis(1,2,2,6,6-pentamethyl-4-piperidyl)sebacate, bis(2,2,6,6-tetramethyl-4-piperidyl)terephthalate, tris(2,2,6,6-tetramethyl-4-piperidyl)benzene-1,3,5-tricarboxylate, etc.

Specific examples of the epoxy compound used in the present invention are epichlorohydrin, glycidine ethers, epoxy fatty acid esters such as epoxybutyl stearate, epoxyoctyl stearate, etc., epoxidized oils such as epoxidized soybean oil, epoxidized linseed oil, etc.

In the present invention, the amount of either the Michael's acceptor, hindered amine light stabilizer or

epoxy compound auded to an organic phosphonic ester is usually 0.01 to 100% by weight, preferably 0.1 to 50% by weight, more preferably 0.5 to 50% by weight, based on the organic phosphoric ester of the general formula (I).

The organic phosphoric ester stabilized by adding the Michael's acceptor, hindered amine light stabilizer or epoxy compound shows a high activity against various soil pests. Specific examples of the pests are pests of Diabrotica genus such as western corn rootworm (Diabrotica virgifera virgifera), northern corn rootworm (Diabrotica longicornis barberi), southern corn rootworm (Diabrotica undecimpunctata howardi), etc.; pests of Anomala genus such as cupreous chafer (Anomala cuprea Hope), soybean beetle (Anomala rufocuprea Motschulsky), cherry chafter (Anomala daimiana Harold), pests of Mimela genus such as lineate chafer (Mimela testaceipes Motschulsky), etc.; pests of Popillia genus such as Japanese beetle (Popillia japonica Newman), etc.; pests of Aulacophora genus such as cucurbit leaf beetle (Aulacophora femoralis Motschulsky), etc.; pests of Phyllotreta genus such as striped flea beetle (Phyllotreta striolata Fabricius), etc.; pests of Melanotus genus such as sweetpotato wireworm (Melanotus fertnumi Candeze), etc.; pests of Agriotes genus such as barley wireworm (Agriotes ogurae fuscicollis Miwa), etc.; pests of Delia genus such as onion maggot (Delia antiqua Meigen), turnip maggot (Delia floralis Fallén), seedcorn maggot (Delia platura Meigen), etc.; pests of Agrotis genus such as turnip moth (Agrotis segetum Denis et Schiffermüller), dark sword grass moth (Agrotis ipsilon Hufnagel), etc.; pests of Gryllotalpa genus such as African mole cricket (Gryllotalpa sp.), etc.; pests of Lissorhoptrus genus such as rice water weevil (Lissorhoptrus oryzophilus Kuschel), etc.; pests of Pratylenchus genus such as Cobb root-lesion nematode (Pratylenchus penetrans Cobb), walnut root-lesion nematode (Pratylenchus vulnus Allen et Jensen), coffee root-lesion nematode (Pratylenchus coffeae Zimmermann), etc.; pests of Heterodera genus such as soybean cyst nematode (Heterodera glycines Ichinohe), etc.; pests of Meloidogyne genus such as northern root-knot nematode (Meloidogyne hapla Chitwood), cotton root-knot nematode (Meloidogyne incognita Chitwood), Javanese root-knot nematode (Meloidogyne javanica Treub), peanut root-knot nematode (Meloidogyne arenaria Neal), etc.; pests of Aphelenchoides genus such as rice white-tip nematode (Aphelenchoides besseyi Christie) and the like.

When the stabilized compound of the present invention is used as an active ingredient in a soil pest controlling agent, it is usually formulated into an oil spray, emulsifiable concentrate, wettable powder, granules, dust, aerosol, or the like by mixing the compound with solid carriers, liquid carriers or gaseous carriers and, optionally, adding either a surfactant, fixing agent, dispersant, stabilizer other than the hindered amine light stabilizer or other formulation auxiliaries.

These formulations preferably contain 0.1 to 40 parts by weight of the compound of the formula (I) as an active ingredient. They contain preferably 0.01 to 40 parts by weight, more preferably 0.05 to 20 parts by weight, of the Michael's receptor, hindered amine light stabilizer or epoxy compound.

Specific examples of the solid carrier are fine powders or granules of clays (e.g. kaolin, diatomite, synthetic hydrous silicon hydroxide, montmorillonite, bentonite, terra alba and acid clay), talc, other inorganic minerals (e.g. sericite, quartz powder, sulfur powder, activated carbon, attapulgite clay, pumice, zeolite, calcium carbonate and hydrated silica), chemical fertilizers (e.g. ammonia sulfate, ammonia phosphate, ammonia nitrate, urea and ammonia chloride). Specific examples of the liquid carrier are water, alcohols (e.g. methanol, ethanol, etc.), ketones (e.g. acetone, methyl ethyl ketone, etc.), aromatic hydrocarbons (e.g. benzene, toluene, xylene, ethylbenzene, methylnaphthalene, etc.), aliphatic hydrocarbons (e.g. n-hexane, cyclohexane, kerosene, etc.), esters (e.g. ethyl acetate, butyl acetate, etc.), nitriles (e.g. acetonitrile, isobutyronitrile, etc.), ethers (e.g. dioxane, diisopropyl ether, etc.), acid amides (e.g. dimethylformamide, dimethylacetamide, etc.), halogenated hydrocarbons (e.g. dichloroethane, trichloroethylene, carbon tetrachloride, etc.), and the like. Specific examples of the gaseous carrier, i.e. a propellant, are a chlorofluorocarbon gas, butane gas, carbondioxide gas, etc.

Specific examples of the surfactant are alkyl sulfate esters, alkyl sulfonates, alkylaryl sulfonates, alkyl aryl ethers and polyoxyethylene compounds thereof, polyethylene glycol ethers, polyhydric alcohol esters, sugar alcohol derivatives, etc.

Specific examples of fixing agents and dispersants are casein, gelatin, polysaccharides (e.g. starch powder, gum arabic, cellulose derivative, alginic acid, etc.), lignin derivative, bentonite, saccharides, synthetic water-soluble polymers (e.g. polyvinyl alcohol, polyvinyl pyrrolidone, polyacrylic acids), and the like.

Specific examples of stabilizers other than the hindered amine light stabilizers are PAP (isopropyl acid phosphate), BHT (2,6-di-tert-butyl-4-methylphenol), BHA (a mixture of 2-tert-butyl-4-methoxyphenol and 3-tert-butyl-4-methoxyphenol), animal or vegetable oils, mineral oils, surfactants, fatty acids or esters thereof, and the like.

Further, other formulation auxiliaries such as a wax, perfume, dyestuff, antiseptic, machine oil, liquid

paraffin, etc., may be also incorporated.

The above formulation, as it is or after being diluted with water or the like, can be applied to soil surface, into soil or to foliages of plants. When it is applied to soil surface, it may be mixed with soil. The formulation can be used with other insecticides, acaricides, nematocides, fungicides, seed sterilizers, fertilizers or soil improvers. They may be mixed before the application. Alternatively, they may be independently applied at the same time.

When the soil pest controlling agent of the present invention is applied, the application amount of the organic phosphoric ester of the formula (I) is usually from 1 to 1,000 grams per 10 ares, preferably 10 to 500 grams per 10 ares. When the emulsifiable concentrate, wettable powder, flowable concentrate, or the like is applied after being diluted with water, the application concentration of the organic phosphoric ester is usually from 0.001 to 30%, preferably 0.01 to 0.1%. The soil pest controlling agent of the present invention in the form of granules or powders is usually applied as such without being diluted.

The above application amount and application concentration vary depending upon preparation form, application time, application place, application method, pest kind, damage degree, etc. They may be increased or decreased beyond the above-mentioned ranges.

The following Formulation Examples, Test Examples and Comparative Examples serve to give specific illustrations of the practice of the present invention; however they are not intended any way to limit the scope of the present invention.

Test Example 1

Michael's acceptors shown in Table 1 (100 mg each) were added to 10 g of O,O-diethyl O-1-(N-methoxyimino)-ethylphosphorothioate (hereinafter Compound A), respectively. The resultant samples were allowed to stand at 60 °C for 2 days. The residual ratio of Compound A in each of the samples was determined by gas chromatography analysis. Table 1 shows the results.

TABLE 1

| Michael's receptor | Residual ratio (%) |
|---|---|
| Acrolein | 99.2 |
| p-Benzoquinone | 97.5 |
| Methyl vinyl ketone | 97.4 |
| Ethyl acrylate | 97.5 |
| Acrylonitrile | 91.5 |
| No addition | 33.6 |

On the other hand, a sample containing no Michael's acceptor was prepared. It was allowed to stand at 60 °C for 2 days. Then, the sample was subjected to silica gel chromatography to obtain 5.6 g of an isomerized compound, S-1-(N-methoxyimino)ethylphosphorothiolate.

The isomerized compound showed the following physical property data.

$n_D^{19.2}$ 1.4739

IR ($cm^{-1}$); 2992 (m), 2948 (m), 2916 (m), 1590 (ω, C=N), 1444 (m), 1394 (m), 1370 (m), 1264 (s, P=O), 1162 (m), 1100 (m), 1036 (s, P-O-C), 1014 (s), 978 (s), 902 (m), 882 (m), 792 (m), 748 (m)

$^1$H-NMR (60 MHz)

δ value (ppm, solvent: $CDCl_3$, internal standard: TMS) 1.30 (6H, t, J=6Hz), 2.15 and 2.25 (each 1.5H, $CH_3$, Syn-anti mixture), 3.80 (3H, s, $CH_3O$), 3.85 - 4.85 (4H, m)

MS m/z 241 ($M^+$), 210, 154, 125, 72, 43

Elemental analysis

Theoretical ($C_7H_{16}NO_4PS$ = 241.27)

C; 34.84, H; 6.70, N; 5.81

P; 12.84, S; 13.29

Found

C; 34.95, H; 6.80, N; 5.66, P; 12.70,

S; 13.35

Test Example 2

p-Benzoquinone (2% by weight or 5% by weight) was added to 10 g of Compound A, and the resultant samples were allowed to stand at 60 °C for 1 month. The residual ratio of Compound A in each of the samples was determined by high-performance liquid chromatography analysis. Table 2 shows the results.
(Analysis conditions)
Chromatograph : Shimadzu LC-6A (UV: 210 nm)
Column : SUMIPAX ODS A-212
Eluting solution: acetonitrile/water = 7/3
Flow rate : 1 ml/min.
Temperature : room temeprature

TABLE 2

| Stabilizer | Amount added of p-benzoquinone (wt.%) | Residual ratio (%) |
|---|---|---|
| p-Benzoquinone | 5 | 92.5 |
| | 2 | 84.0 |
| No addition | - | 22.8 |

Formulation Example 1

p-Benzoquinone (0.3 part) was mixed with 7.5 parts of Compound A. Then, as a carrier, 92.2 parts of BIODAC® 25/50 (granules of pulp waste, supplied by Edward Lowe Industries Inc.) was added thereto and mixed to impregnate the carrier with Compound A, whereby a granule having an active ingredient content of 7.5% was obtained.

Formulation Example 2

p-Benzoquinone (0.3 part) was mixed with 7.5 parts of Compound A. Then, as a carrier, 92.2 parts of Celatom® 24/48 (calcined diatomite, supplied by Eagle Picher Inc.) was added thereto and mixed to impregnate the carrier with the Compound A, whereby a granule having an active ingredient content of 7.5% was obtained.

Comparative Example 1

BIODAC® 25/50 (92.5 parts, the same as that described in Preparation Example 1), a carrier, was mixed with 7.5 parts of Compound A to impregnate the carrier with the Compound A, whereby a granule having an active ingredient content of 7.5% was obtained.

Comparative Example 2

Celatom® 24/48 (92.5 parts, the same as that described in Preparation Example 2), a carrier, was mixed with 7.5 parts of Compound A to impregnate the carrier with the Compound A, whereby a granule having an active ingredient content of 7.5% was obtained.

Test Example 3

The granules obtained in Formulation Example 1 and Comparative Example 1 were subjected to

storage tests under heat. The decomposition ratio of the active ingredient in each of the granules was determined by gas chromatography analysis.

Table 3 shows the results.

TABLE 3

| Stabilizer | Amount in formulation (%) | Decomposition ratio after storage (%) | |
|---|---|---|---|
| | | at 40° C for 30 days | at 40° C for 90 days |
| p-Benzoquinone | 0.3 | 3.7 | 4.5 |
| No addition | - | 13.9 | 16.2 |

Test Example 4

The granules obtained in Formulation Example 2 and Comparative Example 2 were subjected to a storage test under heat, and the decomposition ratio of the active ingredient in each of the granules was determined by gas chromatography analysis.

Table 4 shows the results.

TABLE 4

| Stabilizer | Amount in formulation (%) | Decomposition ratio after storage (%) at 40° C for 30 days |
|---|---|---|
| p-Benzoquinone | 0.3 | 18.3 |
| No addition | - | 62.8 |

Test Example 5

Stabilizers (0.5 to 5% by weight) shown in Table 5 were added to 10 g of Compound A, respectively. The resultant samples were allowed to stand at 60° C for 1 month. The residual ratio of Compound A in each of the samples was determined by high-performance liquid chromatography analysis.

Table 5 shows the results.

(Analysis conditions)

Chromatograph : Shimadzu LC-6A (UV: 210 nm)

Column : SUMIPAX ODS A-212

Eluting solution: acetonitrile/water = 7/3

Flow rate : 1 ml/min.

Temperature : room temperature

TABLE 5

| Stabilizer | Amount added to Compound A (wt%) | Residual ratio (%) |
|---|---|---|
| Bis(1,2,2,6,6-pentamethyl-4-piperidyl sebacate | 5 | 99.1 |
| | 2 | 97.8 |
| | 1 | 100.0 |
| | 0.5 | 99.4 |
| Glycidol | 5 | 98.4 |
| | 2 | 98.5 |
| | 1 | 99.3 |
| | 0.5 | 97.4 |
| Epichlorohydrin | 5 | 87.6 |
| No addition | - | 22.8 |

Formulation Example 3

0.05 Part, 0.1 part, 0.3 part or 0.5 part of bis(1,2,2,6,6-pentamethyl-4-piperidyl)sebacate was mixed with 7.5 parts of Compound A. Then, as a carrier, BIODAC® 25/50 (granuels of pulp waste, supplied by Edward Lowe Industries Inc.) was added to each of the mixtures so that the total amount of the resultant mixtures was 100 parts, and they were mixed to impregnate the carrier with Compound A, whereby granules having an active ingredient content of 7.5% were obtained.

Formulation Example 4

0.5 Part of bis(1,2,2,6,6-pentamethyl-4- piperidyl)sebacate was mixed with 7.5 parts of Compound A. Then, as a carrier, 92.0 parts of Celatom® 24/48 (calcined diatomite), supplied by eagle Richer Inc.) was added thereto and mixed to impregnate the carrier with Compound A, whereby a granule having an active ingredient content of 7.5% was obtained.

Formulation Example 5

0.3 Part or 0.5 part of bis(1,2,2,6,6-pentamethyl-4-piperidyl)sebacate was mixed with 7.5 parts of O,O-diethyl O-1-(N-methoxyimino)propylphosphorothioate (hereinafter Compound B). Then, as a carrier, BIODAC® 25/50 (previously specified) was added to each of the mixtures so that the total amount of the resultant mixtures was 100 parts, and they were mixed to impregnate the carrier with Compound B, whereby granules having an active ingredient content of 7.5% were obtained.

Formulation Example 6

20.0 Parts of Compound B, 1.0 part of bis(1,2,2,6,6-pentamethyl-4-piperidyl)sebacate, 4.0 parts of ATLOX® 3403F (surfactant, supplied by ICI, Inc.), 4.0 parts of ATLOX® 3404F (surfactant, supplied by ICI, Inc.) and 71.0 parts of SOLVESSO® 150 (aromatic hydrocarbon, supplied by Exxon Corp. were thoroughly mixed to obtain an emulsifiable concentrate having an active ingredient content of 20%.

Forrnulation Example 7

20.0 Parts of Compound B, 3.0 parts of bis(1,2,2,6,6-pentamethyl-4-piperidyl)sebacate, 17.0 parts of Tokusil® GU-N (hydrous silicic acid, supplied by Tokuyama Soda Co., Ltd.), 4.0 parts of Sorpol® 5060 (surfactant, supplied by Toho Chemicals Industries Co., Ltd.0, 2.0 parts of Demol® SNB (surfactant, supplied by Kao Corp.) and 54.0 parts of diatomite were thoroughly mixed in a mortar with a pestle, and then, further mixed in a juicer to obtain a wettable powder having an active ingredient content of 20%.

Formulation Example 8

3.0 Part of bis(1,2,2,6,6-pentamethyl-4-piperidyl)sebacate was mixed with 20.0 parts of Compound B. The resultant mixture was added to 27 parts of a water solution containing 13.3% by weight of Gosenol GL-05® (polyvinylalcohol, polymerization degree: not more than 1,000, saponification degree: 86.5 to 89.0, supplied by Nippon Synthetic Chemical Industry Co., Ltd.). Then, the mixture was stirred in a T.K. homomixer® (manufactured by Tokushukika Kogyo Inc.) at a rate of 7,000 rpm for 5 minutes. Thereafter, at room temperature, 50 parts of a water solution containing 0.4% by weight of Kelzan ®S (xanthan gum supplied by Kelco Co., U.S.A.) and 0.8% by weight of Veegum® (aluminum magnesium silicate supplied by Vanderbilt Co., U.S.A.) were added to the above mixture. The resulting mixture was stirred slowly for several minutes to obtain an oil-in-water emulsion formulation (flowable formulation) having an active ingredient concentration of 10% by weight.

Comparative Example 3

92.5 Parts of BIODAC® 25/50 (previously specified), a carrier, was mixed with 7.5 parts of Compound A to impregnate the carrier with Compound A, whereby a granule having an active ingredient content of 7.5% was obtained.

Comparative Example 4

92.5 Parts of Celatom® 24/48 (previously specified), a carrier, was mixed with 7.5 parts of Compound A to impregnate the carrier with Compound A, whereby a granule having an active ingredient content of 7.5% was obtained.

Comparative Example 5

92.5 Parts of BIODAC® 25/50 (previously specified), a carrier, was mixed with 7.5 parts of Compound B to impregnate the carrier with the Compound B, whereby a granule having an active ingredient content of 7.5% was obtained.

Test Example 6

The formulations obtained in Formulation Example 3 and Comparative Example 3 were subjected to storage tests under heat. The decomposition ratio of the active ingredient of each of the formulation was determined by gas chromatography analysis.

Table 6 shows the results.

TABLE 6

| Stabilizer | Amount (%) | Decomposition ratio (%) after storage | |
|---|---|---|---|
| | | at 40° C for 30 days | at 50° C for 30 days |
| Bis(1,2,2,6,6-pentamethyl-4-piperidyl)sebacate | 0.05 | 5.3 | 4.9 |
| | 0.1 | 4.4 | 5.3 |
| | 0.3 | 3.4 | 6.5 |
| | 0.5 | 5.9 | 6.5 |
| No addition | - | 13.9 | 19.2 |

Test Example 7

The formulations obtained in Formulation Example 4 and Comparative Example 4 were subjected to storage tests under heat. The decomposition ratio of the active ingredient in each of the formulations was determined by gas chromatography analysis.

TABLE 7

| Stabilizer | Amount (%) | Decomposition ratio (%) after storage | | |
|---|---|---|---|---|
| | | at 40° C for 30 days | at 50° C for 30 days | at 60° C for 30 days |
| Bis(1,2,2,6,6-pentamethyl-4-piperidyl)sebacate | 0.5 | 3.3 | 4.9 | 11.2 |
| No addition | - | 62.8 | 100.0 | 100.0 |

Test Example 8

The formulations obtained in Formulation Example 5 and Comparative Example 5 were subjected to storage tests under heat. The decomposition ratio of the active ingredient in each of the preparations was determined by gas chromatography analysis. Table 8 shows the results.

TABLE 8

| Stabilizer | Amount (%) | Decomposition ratio (%) after storage | |
|---|---|---|---|
| | | at 40° C for 30 days | at 50° C for 30 days |
| Bis(1,2,2,6,6-pentamethyl-4-piperidyl)sebacate | 0.3 | 2.3 | 3.4 |
| | 0.5 | 2.1 | 1.1 |
| No addition | - | 10.3 | 11.2 |

Test Example 9

The formulation (42.6 mg) obtained in Formulation Example 1 or 3 was thoroughly mixed with 2 kg of nonsterilized soil to prepare soil samples. Each of the soil samples was filled in a plastic container having a length of 20.3 cm, a width of 28.0 cm and a height of 7.0 cm (corresponding to 0.5 pound of active ingredient per acre). The soil samples were suitably irrigated. 50 Grams of soil was taken from each of the soil samples immediately after the mixing and at certain intervals of time. Then, each of these 50 g-portions taken from the soil samples was thoroughly mixed with 5 ml of water, and transferred into plastic cups. And, 10 third-instar larvae of southern corn rootworm (*Diabrotica undecimpunctata howardi*) and two budding grains of corn were placed in the cups. After three days, the numbers of dead larvae and moribund larvae were counted and the damage degree on the grains were examined. The mortality and moribundity were determined on the basis of the numbers of the dead larvae and moribund larvae (duplicate).

The damage degree was expressed by the following ratings.

(Determination)

- : No damage

- ~ + : Slightly damaged

+ : Damaged by about 50 percent

+ ~ + + : Damaged to a considerable extent

+ + : Damaged to the same degree as in no treatments.

Tables 9 and 10 show the results.

TABLE 9

| Amount in formulation (%) | Mortality (%), [ ] shows moribundity | | |
|---|---|---|---|
| | Immediately after application | After | |
| | | 14 days | 32 days |
| Formualtion Example 1 | 100 | 100 | 75 [100] |
| Formulation Example 3 | | | |
| 0.1 | 100 | 100 | |
| 0.3 | 100 | 100 | |
| 0.5 | 100 | 100 | |

TABLE 10

| Amount in formulation (%) | . Damage degree | | |
|---|---|---|---|
| | Immediately after application | After | |
| | | 14 days | 32 days |
| Formulation Example 1 | - | - | - |
| Formulation Example 3 | | | |
| 0.1 | - | - | |
| 0.3 | - | - | |
| 0.5 | - | - | |

Test Example 10

The formulations obtained in Formulation Example 5 (stabilizer content (%): 0.3 and 0.5) were tested for a damage degree, mortality and moribundity in the same manner as in Test Example 9.

Tables 11 and 12 show the results.

TABLE 11

| Amount of stabilizer (%) | Mortality (%), [ ] shows a moribundity | | | | | |
|---|---|---|---|---|---|---|
| | Immediately after application | After | | | | |
| | | 14 days | 32 days | 42 days | 56 days | 70 days |
| 0.3 | 100 | 100 | 100 | 100 | 100 | 75 [100] |
| 0.5 | 100 | 100 | 50 [100] | 100 | 100 | 90 [90] |

TABLE 12

| Amount of stabilizer (%) | Damage degree | | | | | |
|---|---|---|---|---|---|---|
| | Immediately after application | After | | | | |
| | | 14 days | 32 days | 42 days | 56 days | 70 days |
| 0.3 | - | - | - | - | - | - ~ + |
| 0.5 | - | - | - | - | - | - |

The organic phosphoric esters having the formula (I) can be stabilized by adding thereto a Michael's

acceptor, hindered amine light stabilizer or epoxy compound. It would be because the thiono-thiolo isomerization reaction thereof can be prevented. Therefore, the method of the present invention is extremely effective in stabilizing the organic phosphoric esters. And a soil pest controlling agent containing, as an active ingredient, the ester stabilized by the method is very useful.

## Claims

1. A process for stabilizing an organic phosphoric ester of formula (I)

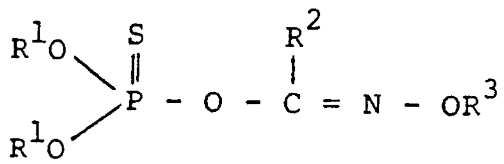

(I)

wherein $R^1$, $R^2$ and $R^3$ are the same or different and each is methyl or ethyl which process comprises adding a Michael's acceptor, a hindered amine light stabilizer or an epoxy compound to the compound of formula (I).

2. A process according to claim 1, which further comprises selecting as the organic phosphoric ester of formula (I) a compound wherein $R^1$ is ethyl, $R^2$ is methyl and $R^3$ is methyl.

3. A process according to claim 1, which further comprises selecting as the organic phosphoric ester of formula (1) a compound wherein $R^1$ is ethyl, $R^2$ is ethyl and $R^3$ is methyl.

4. A process according to any one of claims 1 to 3 comprising adding a Michael's acceptor which further comprises selecting acrolein, p-benzoquinone, methyl vinyl ketone, ethyl acrylate or acrylonitrile as the Michael's acceptor.

5. A process according to any one of claims 1 to 4 comprising adding a hindered amine, which further comprises selecting bis-(1,2,2,6,6-pentamethyl-4-piperidyl)sebacate as the hindered amine light stabilizer.

6. A process according to any one of claims 1 to 5 comprising adding an epoxy compound, which further comprises selecting glycidol or epichlorohydrin as the epoxy compound.

7. A soil pest controlling agent containing, as an active ingredient, an organic phosphoric ester of formula (I),

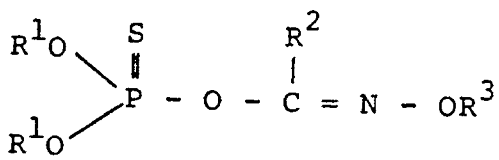

(I)

wherein $R^1$, $R^2$ and $R^3$ are the same or different and each is methyl or ethyl and, as stabilizer therefor, a Michael's acceptor, a hindered amine light stabilizer or an epoxy compound.

8. An agent according to claim 2, wherein the organic phosphoric ester is a compound of the formula (I) wherein $R^1$ is ethyl, $R^2$ is methyl and $R^3$ is methyl.

9. An agent according to claim 2, wherein the organic phosphoric ester is a compound of the formula (I) wherein $R^1$ is ethyl, $R^2$ is ethyl and $R^3$ is methyl.

10. An agent according to any one of claims 7 to 9 comprising a hindered amine wherein the hindered amine light stabilizer is bis(1,2,2,6,6-pentamethyl-4-piperidyl)sebacate.